# EUROPÄISCHE PATENTSCHRIFT

(11) **EP 3 972 880 B1**
(45) Veröffentlichungstag und Bekanntmachung des Hinweises auf die Patenterteilung: **28.06.2023**
(21) Anmeldenummer: 20746895.0
(22) Anmeldetag: 14.07.2020
(51) Int. Cl.: B60T 17/08

(54) **NOTLÖSEVORRICHTUNG FÜR EINE FAHRZEUGBREMSE**
EMERGENCY TRIGGERING DEVICE FOR A VEHICLE BRAKE
DISPOSITIF DE DÉSERRAGE D'URGENCE POUR FREIN DE VÉHICULE

(30) Priorität: 30.07.2019 AT 506882019
(43) Veröffentlichungstag der Anmeldung: 30.03.2022
(73) Patentinhaber: Siemens Mobility Austria GmbH, 1210 Wien (AT)
(72) Erfinder: GRITSCH, Alexander, 8435 Leitring (AT)
(74) Vertreter: Siemens Patent Attorneys
(86) Internationale Anmeldenummer: PCT/EP2020/069877
(87) Internationale Veröffentlichungsnummer: WO 2021/018567

(56) Entgegenhaltungen:
- WO-A1-2017/202462
- DE-A1- 19 724 435
- DE-A1-102010 000 737
- DE-A1-102011 119 998
- DE-A1-102015 122 307
- KR-A- 20100 078 751
- US-A- 3 511 347

## Beschreibung

Die Erfindung betrifft eine Notlösevorrichtung für eine Fahrzeugbremse, insbesondere für eine Feststellbremse eines Fahrwerks eines Schienenfahrzeugs, mit zumindest einem mit einer Bremsvorrichtung verbindbaren Notlösezug und zumindest einer mit dem zumindest einen Notlösezug verbindbaren mechanischen Betätigungsvorrichtung.

In Fahrwerken für Schienenfahrzeuge werden häufig Reibungsbremsen eingesetzt. Diese umfassen in bekannter Weise Krafterzeugungseinheiten, die z.B. Betriebs- und Feststellbremszylinder, Federn etc. aufweisen können.

Bekannte Feststellbremszylinder drücken ein Reibelement (z.B. einen Bremsbelag, ein Bremsbelagpaar oder einen Bremsklotz etc., die auf Haltern angeordnet sein können) über eine, mit dem Reibelement und der Krafterzeugungseinheit verbundene mechanische Kraftübertragungseinheit (z.B. ein Gestänge) an einen Reibpartner (z.B. eine Bremsscheibe oder ein Rad etc.). Dieser Vorgang wird eingeleitet, wenn Druckluft, die auf eine in dem Feststellbremszylinder angeordnete Feder wirkt und diese vorspannt, aus einer Luftkammer des Feststellbremszylinders entweicht, d.h. der Druck im Feststellbremszylinder reduziert wird, aufgrund des verringerten Drucks die Vorspannung der Feder abnimmt und die sich entspannende Feder einen Kolben innerhalb des Feststellbremszylinders sowie die Kraftübertragungseinheit bewegt. Aufgrund der Bewegung der Kraftübertragungseinheit wird das Reibelement an den Reibpartner angelegt. Auf diese Weise wird das Schienenfahrzeug vor Abrollen und Abrutschen auf einem Gleis gesichert. Wird der Druck in dem Feststellbremszylinder erhöht, so werden der Kolben in eine Gegenrichtung bewegt, die Feder vorgespannt und das Reibelement von dem Reibpartner gelöst. Dadurch wird die Feststellbremswirkung reduziert, d.h. die Feststellbremse wird gelöst.

Eine Notlösevorrichtung oder Notlöseeinrichtung wird eingesetzt, um einen Lösevorgang auch bei Fehlfunktionen der Feststellbremse, d.h. wenn sich beispielsweise die Luftkammer des Feststellbremszylinders nicht ordnungsgemäß mit Druckluft füllt (z.B. aufgrund von Leckagen in einer Druckluftleitung), einleiten zu können.

Die Notlösevorrichtung wird in bekannter Weise z.B. manuell über ein Kraftübertragungsglied (z.B. einen Notlösezug oder Bowdenzug) in einem Außenbereich des Schienenfahrzeugs betätigt. Das Kraftübertragungsglied ist beispielsweise mit dem Feststellbremszylinder verbunden, übt bei Betätigung eine Zugkraft gegen die Kraft der Feder auf den Kolben aus und bewegt diesen sowie die Kraftübertragungseinheit in einer Weise, dass das Reibelement von dem Reibpartner gelöst wird, d.h. die Feststellbremswirkung aufgehoben wird.

Die Betätigung des Kraftübertragungsglieds in dem Außenbereich des Schienenfahrzeugs stellt für einen Bediener ein Sicherheitsrisiko dar, da beispielsweise andere, den Bediener gefährdende Schienenfahrzeuge auf benachbarten Gleisen verkehren können oder Stromschienen im Gleisbereich angeordnet sein können, die, um Stromschläge zu vermeiden, nicht berührt werden dürfen etc.

Weiterhin kann aufgrund der baulichen Situation um das Schienenfahrzeug die Notlösevorrichtung unzugänglich sein. Dem Stand der Technik nach bekannt sind Lösungen, die eine Verlegung von zwei Kraftübertragungsgliedern umfassen, wobei ein Kraftübertragungsglied auf einer linken Seite des Schienenfahrzeugs zugänglich ist und ein weiteres Kraftübertragungsglied auf einer rechten Seite.

Dieser Ansatz führt zu keiner Lösung, wenn die linke und die rechte Seite des Schienenfahrzeugs unzugänglich sind. Bekannt sind in diesem Zusammenhang verlängerte Griffstücke für Kraftübertragungsglieder, mit denen beispielsweise aus dem Bereich einer geöffneten Tür des Schienenfahrzeugs heraus ein Ende eines Kraftübertragungsglieds erreicht werden und so die Notlösevorrichtung betätigt werden kann, wenn der Außenbereich des Schienenfahrzeugs unzugänglich ist.

Diese Lösung zeichnet sich in der Bedienung insbesondere dann durch eine geringe Ergonomie aus, wenn für eine Betätigung der Notlösevorrichtung große Betätigungskräfte erforderlich sind (beispielsweise bei aus baulichen Gründen sehr lang ausgeführten Notlösezügen).

Ferner führt eine bekannte Verlegung des Kraftübertragungsglieds von einer auf dem Fahrwerk angeordneten Feststellbremse in den Innenraum des Schienenfahrzeugs zu einem hohen Aufwand, da Relativbewegungen zwischen dem Fahrwerk und einem Wagenkasten bei Auslegung und Führung des Kraftübertragungsglieds berücksichtigt werden müssen.

Aus dem Stand der Technik ist beispielsweise die WO 2017/202462 A1 bekannt, welche eine Parkbremse für ein Schienenfahrzeug zeigt. Die Parkbremse weist eine Notlöseeinrichtung auf, bei der mit einem Kraftübertragungsglied ein elektrischer Aktuator verbunden ist. Dadurch wird eine Fernaktivierung der Notlöseeinrichtung ermöglicht.

Weiterhin zeigt die AT 520429 B1 eine Notlöseeinrichtung für eine Parkbremse eines Schienenfahrzeugs, bei welcher hydraulische Ventile in einer Weise eingerichtet und geschaltet sind, dass sowohl eine manuelle als auch eine fernaktivierte Notlösung der Parkbremse ermöglicht wird.

Die genannten Ansätze weisen in ihren bekannten Formen den Nachteil auf, dass keine Vorrichtungen ersichtlich sind, welche eine mechanische Fernlösung von Parkbremsen auch bei großen mechanischen Widerständen ermöglichen.

Der Erfindung liegt daher die Aufgabe zugrunde, eine gegenüber dem Stand der Technik weiterentwickelte, von einem Wagenkasten aus bedienbare und möglichst leichtgängige Notlösevorrichtung anzugeben.

Erfindungsgemäß wird diese Aufgabe gelöst mit einer Notlösevorrichtung der eingangs genannten Art, bei der die zumindest eine Betätigungsvorrichtung über einen Fahrzeugboden ragend mit einem Wagenkasten verbindbar ist und einen Kraftübersetzer aufweist.

Durch diese Maßnahme wird eine Fernaktivierung der Notlösevorrichtung ermöglicht, welche auch bei sehr großen Betätigungskräften des Notlösezugs mit Muskelkraft bedienbar ist.

Dadurch, dass der Kraftübersetzer Teil der Betätigungsvorrichtung ist, muss eine bereits in dem Fahrzeug eingebaute Feststellbremse nicht nachträglich verändert werden (z.B. im Hinblick auf eine Verlegung des Notlösezugs etc.). Daher eignet sich die erfindungsgemäße Vorrichtung beispielsweise auch für Umrüstungen von Bestandsfahrzeugen, deren Feststellbremsen mit leichtgängigen, mechanisch fernbedienbaren Notlösevorrichtungen ausgerüstet werden sollen.

Die Fernaktivierung der Notlösevorrichtung hat weiterhin günstige Auswirkungen auf Verfügbarkeit und Sicherheit in einem Fahrbetrieb. Beispielsweise werden Stillstandzeiten des Fahrzeugs bei Fehlfunktionen von Feststellbremsen verkürzt und Unfallrisiken gesenkt, da ein Fahrzeugführer zur Durchführung eines Notlösevorgangs im Fahrzeug verbleiben kann, d.h. sich hierzu nicht mehr in einen Fahrwerks- bzw. Gleis- oder Straßenbereich begeben muss.

Eine günstige Lösung wird erzielt, wenn die zumindest eine Betätigungsvorrichtung eine Halterung aufweist, über welche die zumindest eine Betätigungsvorrichtung mit dem Wagenkasten verbindbar ist.

Dabei werden ein besonders rasches Verbinden und Lösen der Betätigungsvorrichtung mit und von dem Wagenkasten dann bewirkt, wenn die Halterung hakenförmig ausgeführt ist. Durch diese Maßnahme muss die Betätigungsvorrichtung zur Verbindung mit dem Wagenkasten lediglich in einen Schlitz oder Spalt etc. des Wagenkastens ein- und zum Lösen ausgeklinkt werden.

Eine vorteilhafte Ausgestaltung erhält man, wenn der Kraftübersetzer als Betätigungshebel ausgebildet ist. In diesem Zusammenhang ist es besonders günstig, wenn der Betätigungshebel als Fußhebel ausgebildet ist.

Durch diese Maßnahme kann bei einer Betätigung der erfindungsgemäßen Notlösevorrichtung ein Bediener sein Körpergewicht und seine Beinkraft ausnutzen.

Es ist günstig, wenn die zumindest eine Betätigungsvorrichtung im Bereich eines Türausschnitts mit dem Fahrzeugboden verbindbar ist oder wenn die zumindest eine Betätigungsvorrichtung im Bereich einer Öffnung des Fahrzeugbodens mit dem Fahrzeugboden verbindbar ist.

Durch diese Maßnahme wird eine Bedienung der erfindungsgemäßen Notlösevorrichtung von einem Fahrzeuginnenraum aus oder in dem Fahrzeuginnenraum ermöglicht.

Eine vorteilhafte Lösung wird erreicht, wenn die zumindest eine Betätigungsvorrichtung einen Griff aufweist.

Dadurch wird eine alternative Bedienmöglichkeit der erfindungsgemäßen Notlösevorrichtung bereitgestellt. Der Bediener kann zum Lösen der Feststellbremse entweder den Kraftübersetzer oder den Griff einsetzen. Weiterhin fungiert der Griff auch als Transport- oder Montagehilfe bei einer Handhabung der Betätigungsvorrichtung.

Nachfolgend wird die Erfindung anhand von Ausführungsbeispielen näher erläutert.

Es zeigen beispielhaft:
- Fig. 1:: Eine schematische, nicht maßstäbliche Skizze einer Scheibenbremsanordnung mit einer Feststellbremse und einem Notlösezug,
- Fig. 2:: Eine beispielhafte erste Ausführungsvariante einer erfindungsgemäßen Notlösevorrichtung mit einem Kraftübersetzer in einem Türausschnitt eines Schienenfahrzeugs und in einem nicht notgelösten Zustand einer Feststellbremse, und
- Fig. 3:: Eine beispielhafte zweite Ausführungsvariante einer erfindungsgemäßen Notlösevorrichtung mit einem Kraftübersetzer im Bereich einer Öffnung in einem Boden eines Schienenfahrzeugs und in einem notgelösten Zustand einer Feststellbremse.

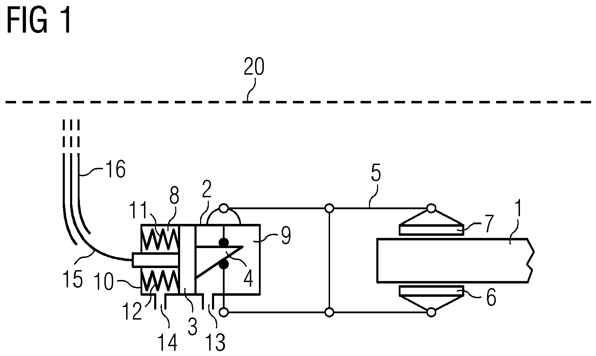

Eine in Fig. 1 schematisch dargestellte, beispielhafte, als Scheibenbremse ausgeführte Bremsvorrichtung eines Schienenfahrzeugs, d.h. eine Fahrzeugbremse, weist eine Wellenbremsscheibe 1 auf, welche auf einem ersten Radsatz eines nicht gezeigten Fahrwerks des Schienenfahrzeugs gelagert ist. Die Scheibenbremse weist weiterhin einen Bremszylinder 2 mit einem druckluftbetätigten Kolben 3 auf, über welchen, übersetzt mittels eines Keils 4, Kolbenkräfte über ein gelenkig mit dem Bremszylinder 2 verbundenes Bremsgestänge 5 auf einen ersten Bremsbelag 6 und einen zweiten Bremsbelag 7 und von dem ersten Bremsbelag 6 und dem zweiten Bremsbelag 7 auf die Wellenbremsscheibe 1 übertragen werden.

Aufgrund auf die Wellenbremsscheibe 1 übertragener Kräfte wird das Schienenfahrzeug gebremst oder im Stand gegen Abrollen und Abrutschen gesichert.

Der Bremszylinder 2, das Bremsgestänge 5 sowie der erste Bremsbelag 6 und der zweite Bremsbelag 7 sind über das Bremsgestänge 5 mit einem nicht dargestellten Fahrwerksrahmen des Schienenfahrzeugs, welcher auf dem ersten Radsatz und einem zweiten Radsatz gelagert ist, verbunden.

Als Feststellbremse, welche als Federspeicherbremse ausgebildet ist, fungiert ein Feststellbremszylinderabschnitt 8 im hinteren Bereich des Bremszylinders 2. Dieser Feststellbremszylinderabschnitt 8 ist mittels des Kolbens 3 von einem Betriebsbremszylinderabschnitt 9 im vorderen Bereich des Bremszylinders 2 getrennt. Zwischen dem Kolben 3 und einer Rückwand 10 des Bremszylinders 2 sind eine erste Feder 11 und eine zweite Feder 12 zur Betätigung des Kolbens 3 bei einer Feststellbremsung angeordnet.

Der Betriebsbremszylinderabschnitt 9 ist über einen ersten Luftanschluss 13, der Feststellbremszylinderabschnitt 8 über einen zweiten Luftanschluss 14 mit Druckluft versorgt.

Der erste Luftanschluss 13 und der zweite Luftanschluss 14 sind über nicht dargestellte Druckluftleitungen, Ventile etc. mit einem nicht dargestellten Druckluftsystem des Schienenfahrzeugs verbunden.

Eine Feststellbremsung wird eingeleitet, wenn Druckluft über den ersten Luftanschluss 13 aus dem

Betriebsbremszylinderabschnitt 9 strömt, folglich Kompressionen der ersten Feder 11 und der zweiten Feder 12 abnehmen und sich der Kolben 3 sowie der Keil 4 von der Rückwand 10 weg bewegen, d.h. nach rechts in Bezug auf die Orientierung des Bremszylinders 2 in Fig. 1.

Über den Keil 4 erfolgt eine Kraftübertragung auf das Bremsgestänge 5.

Aufgrund dieser Kraftübertragung werden der erste Bremsbelag 6 und der zweite Bremsbelag 7 gegen die Wellenbremsscheibe 1 gedrückt. Dadurch wird eine Feststellbremswirkung auf das Fahrwerk und somit auf das Schienenfahrzeug erzeugt.

Ein Notlösevorgang ist beispielsweise bei einer Fehlfunktion der Feststellbremse erforderlich, d.h. wenn sich beispielsweise der Betriebsbremszylinderabschnitt 9 nicht ordnungsgemäß mit Druckluft füllt (z.B. aufgrund von Leckagen in einer Druckluftleitung).

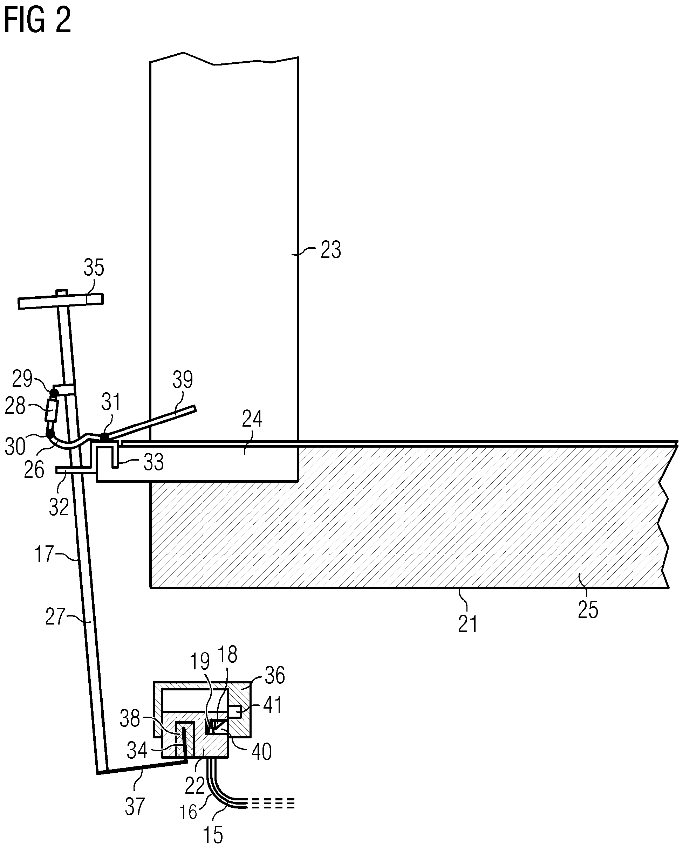

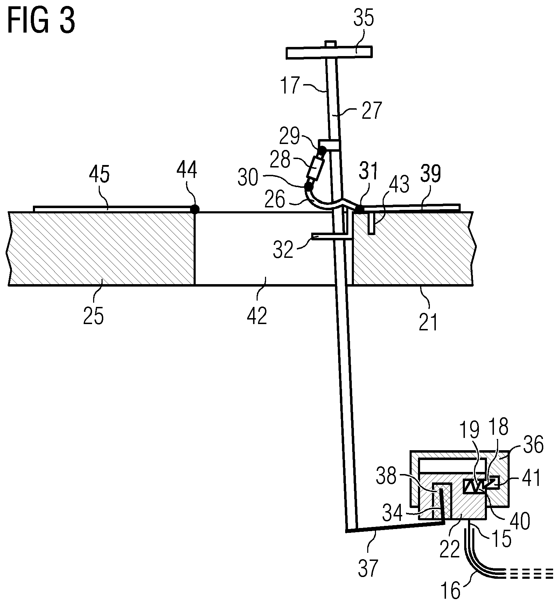

Ein Notlösezug 15 einer Notlösevorrichtung, welcher über sein erstes Ende mit dem Kolben 3 verbunden ist und welcher in einem mit dem Fahrwerksrahmen verbundenen Führungsrohr 16 geführt ist, wird mittels einer Betätigungsvorrichtung 17 gemäß Fig. 2 oder Fig. 3 betätigt.

Wird der Notlösezug 15 betätigt, so wird der Kolben 3 in Richtung der Rückwand 10 gezogen und werden dabei die erste Feder 11 und die zweite Feder 12 komprimiert. In Fig. 2 und Fig. 3 ist jeweils eine Verschlussvorrichtung für eine Arretierung des Kolbens 3 dargestellt, welche einen Verschlusskeil 18 und eine Verschlussfeder 19 umfasst. Aufgrund dieser Arretierung wird die Feststellbremse nach einer Betätigung der Notlösevorrichtung zunächst in einer gelösten Stellung gehalten.

Nach Beendigung der Fehlfunktion wird über den zweiten Luftanschluss 14 Druckluft in den

Feststellbremszylinderabschnitt 8 eingeleitet und ein spezifizierter Druck erzeugt, mit dem die Arretierung über eine aufgrund des Drucks erzeugte Kraft auf den Kolben 3 wieder gelöst und eine Feststellbremsung wieder ermöglicht werden. Bei einem Lösen der Arretierung bewegt sich der Kolben 3 ein wenig nach rechts in Bezug auf die Orientierung des Bremszylinders 2 in Fig. 1.

Der Notlösezug 15 ist mittels des Führungsrohrs 16 zu einer in Längsrichtung des Schienenfahrzeugs verlaufenden Seitenkante 20 eines ausschnittsweise in Fig. 2 und Fig. 3 gezeigten Wagenkastens 21 geführt. Der Wagenkasten 21 ist oberhalb des Fahrwerks vorgesehen und mit diesem verbunden. Über ein zweites Ende des Notlösezugs 15 und einen damit verbunden Adapter 22, welcher jeweils in Fig. 2 und in Fig. 3 gezeigt ist, kann der Notlösezug 15 mit der Betätigungsvorrichtung 17 gemäß Fig. 2 oder Fig. 3 gekoppelt werden.

Fig. 2 zeigt eine beispielhafte erste Ausführungsvariante einer erfindungsgemäßen Notlösevorrichtung in einem Türausschnitt 23 eines Wagenkastens 21 eines

Schienenfahrzeugs. Die Notlösevorrichtung ist für Notlösevorgänge einer in Fig. 1 gezeigten Feststellbremse, d.h. einer Fahrzeugbremse, ausgelegt.

Im Bereich einer Türschiene 24, welche mit einem Fahrzeugboden 25 verbunden ist, ist die Notlösevorrichtung lösbar mit dem Wagenkasten 21 verbunden.

Die Notlösevorrichtung umfasst eine mechanische Betätigungsvorrichtung 17, welche über den Fahrzeugboden 25 ragt und einen Kraftübersetzer 26 aufweist.

Weiterhin umfasst die Betätigungsvorrichtung 17 ein Anschlussteil 27 sowie ein Führungsteil 28, wobei das Führungsteil 28 gelenkig mit dem Anschlussteil 27 und dem Kraftübersetzer 26 verbunden ist.

Zwischen dem Anschlussteil 27, welches metallisch und stangenförmig ausgebildet ist, und dem Führungsteil 28 ist ein erstes Drehgelenk 29 vorgesehen, zwischen dem Führungsteil 28 und dem Kraftübersetzer 26 ein zweites Drehgelenk 30.

Das Führungsteil 28 ist zum Distanzausgleich längenverstellbar und als metallische, teleskopartige Stange ausgeführt.

Der Kraftübersetzer 26 ist als Betätigungshebel ausgeführt. Bei dem Betätigungshebel handelt es sich um einen Fußhebel.

Erfindungsgemäß ist es jedoch auch vorstellbar, den Betätigungshebel als Handhebel auszubilden.

Über ein drittes Drehgelenk 31 ist der Kraftübersetzer 26 gelenkig mit einer metallischen und hakenförmigen Halterung 32 der Betätigungsvorrichtung 17 verbunden. Über die Halterung 32 ist die Betätigungsvorrichtung 17 lösbar mit dem Wagenkasten 21 verbunden. Die Halterung 32 ist in einen ersten Schlitz 33 in der Türschiene 24 eingeklinkt und weist eine in Fig. 2 nicht sichtbare erste Ausnehmung auf, in welcher das Anschlussteil 27 geführt ist.

Das Anschlussteil 27 ist weiterhin durch den Kraftübersetzer 26 hindurchgeführt, welcher hierzu ebenfalls eine in Fig. 2 nicht sichtbare zweite Ausnehmung aufweist. Am oberen Ende des Anschlussteils 27 ist eine Querstange mit dem Anschlussteil 27 verschweißt, welche als Griff 35 der Betätigungsvorrichtung 17 fungiert. Der Griff 35 erleichtert Montage und Handhabung der Betätigungsvorrichtung 17.

Mit der Betätigungsvorrichtung 17 kann die Notlösevorrichtung betätigt werden, wobei Fig. 2 einen nicht betätigten, d.h. nicht notgelösten Zustand der Notlösevorrichtung zeigt.

Die Betätigungsvorrichtung 17 ist über das Anschlussteil 27 mit einem Notlösezug 15 der Feststellbremse verbunden, dessen Anbindung an einen in einem Bremszylinder 2 geführten Kolben 3 in Fig. 1 dargestellt ist. Die Betätigungsvorrichtung 17 ist mit dem Notlösezug 15 verbindbar ausgebildet, d.h. kann an den Notlösezug 15 gekoppelt und wieder von diesem gelöst werden.

Wie auch im Zusammenhang mit Fig. 1 beschrieben, ist der Notlösezug 15 in einem Führungsrohr 16 geführt, welches mit einem nicht dargestellten Fahrwerksrahmen eines ebenfalls nicht gezeigten Fahrwerks des Schienenfahrzeugs verbunden ist. Das Fahrwerk ist unterhalb des Wagenkastens 21 angeordnet und mit diesem verbunden.

Auf dem Führungsrohr 16 bzw. auf einem nicht gezeigten Flansch des Führungsrohrs 16 liegt ein zylindrischer Adapter 22 auf, mit welchem der Notlösezug 15 verbunden ist.

Der Adapter 22 ist in einem Verschlusszylinder 36, welcher ebenfalls mit dem Fahrwerksrahmen verbunden ist, geführt.

Das Anschlussteil 27 weist an seinem unteren Ende einen Notlösehaken 37 auf, über welchen dieses mit dem Adapter 22 und somit mit dem Notlösezug 15 verbunden werden kann.

Der Notlösehaken 37 wird hierzu in einen von einem Gummiwulst 38, welcher in dem Adapter 22 vorgesehen und mit dem Adapter 22 verbunden ist, gebildeten zweiten Schlitz 34 eingeführt. Der Gummiwulst 38 gewährleistet eine gewisse Beweglichkeit des Notlösehakens 37 in dem Adapter 22, welche beispielsweise aufgrund von durch einen Bediener verursachten Quer- oder Drehbewegungen des Anschlussteils 27 vorteilhaft sein kann. Erfindungsgemäß kann anstatt des Notlösehakens 37 auch ein Außengewinde auf dem Anschlussteil 27 vorgesehen sein, welches in ein Innengewinde in einem Gewindeträger, welcher hierzu seitlich auf dem Adapter 22 vorgesehen ist (beispielsweise auf einem Adapterflansch), um während Bewegungen des Adapters 22 nicht mit dem Verschlusszylinder 36 zu kollidieren, eingeschraubt wird.

Zur Betätigung, d.h. zur Notlösung der Feststellbremse, wird der Kraftübersetzer 26 mittels eines Fußtritts im Bereich seiner Trittplatte 39 betätigt, wodurch der Kraftübersetzer 26 um das dritte Drehgelenk 31 rotiert und sich die Trittplatte 39 an den Fahrzeugboden 25 anlegt.

Dadurch, dass der Kraftübersetzer 26 über das Führungsteil 28 sowie über das erste Drehgelenk 29 und das zweite Drehgelenk 30 gelenkig mit dem Anschlussteil 27 verbunden ist, bewegt sich das Anschlussteil 27 aufgrund der Betätigung des Kraftübersetzers 26 nach oben und drückt den Adapter 22 über den Notlösehaken 37 in den Verschlusszylinder 36. Der Adapter 22 hebt dabei von dem Führungsrohr 16 ab und zieht den Notlösezug 15 nach oben, wodurch die Feststellbremse notgelöst wird.

Der Adapter 22 weist eine erste Verschlussausnehmung 40 auf, in welcher ein Verschlusskeil 18 über eine komprimierte Verschlussfeder 19 gelagert ist. Der Verschlusszylinder 36 weist eine zweite Verschlussausnehmung 41 auf, in welche der Verschlusskeil 18 einrastet, wenn sich der Adapter 22 während der Betätigung der Notlösevorrichtung ausreichend weit nach oben bewegt hat.

Ist der Verschlusskeil 18 in die zweite Verschlussausnehmung 41 eingerastet, so ist die Notlösevorrichtung arretiert und die Feststellbremse verbleibt in einem notgelösten Zustand, selbst wenn der Notlösehaken 37 wieder aus dem Adapter 22 entfernt wird.

Fig. 3 zeigt eine beispielhafte zweite Ausführungsvariante einer erfindungsgemäßen Notlösevorrichtung für eine Feststellbremse eines Schienenfahrzeugs. Die

Notlösevorrichtung entspricht konstruktiv und hinsichtlich ihrer Funktionsweise jener beispielhaften ersten Ausführungsvariante, welche in Fig. 2 gezeigt ist. Es werden daher teilweise gleiche Bezugszeichen verwendet.

Im Unterschied zu Fig. 2 ist die Notlösevorrichtung von Fig. 3 im Bereich einer Öffnung 42 eines Fahrzeugbodens 25 über eine Halterung 32 lösbar mit dem Fahrzeugboden 25 verbunden. Die Halterung 32 ist in einen Bodenschlitz 43 eingeklinkt.

Die Öffnung 42 ist mittels eines über ein Scharnier 44 mit dem Fahrzeugboden 25 gelenkig verbundenen Deckels 45 verschließbar.

Ein Notlösehaken 37 ist in einen Adapter 22 eines Notlösezugs 15 eingeklinkt. Der Adapter 22 und der Notlösezug 15 sind unterhalb des Fahrzeugbodens 25 angeordnet und mit einem nicht gezeigten Fahrwerksrahmen des Schienenfahrzeugs verbunden.

Über ein mit dem Fahrwerksrahmen verbundenes Führungsrohr 16 ist der Notlösezug 15 zu einem Kolben 3 eines Bremszylinders 2, wie z.B. in Fig. 1 gezeigt, geführt.

Ein in einer ersten Verschlussausnehmung 40 gelagerter Verschlusskeil 18 des Adapters 22 ist in eine zweite Verschlussausnehmung 41 eines Verschlusszylinders 36 eingerastet, wodurch die Feststellbremse notgelöst ist und sich die Notlösevorrichtung in einem arretierten Zustand befindet.

Um diesen arretierten Zustand zu beenden, muss der Notlösehaken 37 aus dem Adapter 22 entfernt sein und es wird, wie im Zusammenhang mit Fig 1 beschrieben, Druckluft in einen Feststellbremszylinderabschnitt 8 des Bremszylinders 2 eingeleitet. Dadurch wird ein spezifizierter Druck erzeugt, mit dem die Arretierung über eine aufgrund des Drucks erzeugte Kraft auf den Kolben 3 wieder gelöst und eine Feststellbremsung wieder ermöglicht werden.

Durch eine entsprechende Bewegung des Kolbens 3 aufgrund der Kraft werden der Notlösezug 15 mit dem Adapter 22 nach unten gezogen, wodurch eine Kraft auf den Verschlusskeil 18 erzeugt wird. Aufgrund der Kraft zieht sich der Verschlusskeil 18 in die erste Verschlussausnehmung 40 zurück und gibt den Adapter 22 frei, wodurch sich der Adapter 22 an das Führungsrohr 16 anlegt.

### Liste der Bezeichnungen

- 1: Wellenbremsscheibe
- 2: Bremszylinder
- 3: Kolben
- 4: Keil
- 5: Bremsgestänge
- 6: Erster Bremsbelag
- 7: Zweiter Bremsbelag
- 8: Feststellbremszylinderabschnitt
- 9: Betriebsbremszylinderabschnitt
- 10: Rückwand
- 11: Erste Feder
- 12: Zweite Feder
- 13: Erster Luftanschluss
- 14: Zweiter Luftanschluss
- 15: Notlösezug
- 16: Führungsrohr
- 17: Betätigungsvorrichtung
- 18: Verschlusskeil
- 19: Verschlussfeder
- 20: Seitenkante
- 21: Wagenkasten
- 22: Adapter
- 23: Türausschnitt
- 24: Türschiene
- 25: Fahrzeugboden
- 26: Kraftübersetzer
- 27: Anschlussteil
- 28: Führungsteil
- 29: Erstes Drehgelenk
- 30: Zweites Drehgelenk
- 31: Drittes Drehgelenk
- 32: Halterung
- 33: Erster Schlitz
- 34: Zweiter Schlitz
- 35: Griff
- 36: Verschlusszylinder
- 37: Notlösehaken
- 38: Gummiwulst
- 39: Trittplatte
- 40: Erste Verschlussausnehmung
- 41: Zweite Verschlussausnehmung
- 42: Öffnung
- 43: Bodenschlitz
- 44: Scharnier
- 45: Deckel

## Patentansprüche

1. Notlösevorrichtung für eine Fahrzeugbremse, insbesondere für eine Feststellbremse eines Fahrwerks eines Schienenfahrzeugs, mit zumindest einem mit einer Bremsvorrichtung verbindbaren Notlösezug und zumindest einer mit dem zumindest einen Notlösezug verbindbaren mechanischen Betätigungsvorrichtung, **dadurch gekennzeichnet, dass** die zumindest eine Betätigungsvorrichtung (17) über einen Fahrzeugboden (25) ragend mit einem Wagenkasten (21) verbindbar ist und einen Kraftübersetzer (26) aufweist.

2. Notlösevorrichtung nach Anspruch 1, **dadurch gekennzeichnet, dass** die zumindest eine Betätigungsvorrichtung (17) ein Anschlussteil (27) sowie ein Führungsteil (28) aufweist, die zumindest eine Betätigungsvorrichtung (17) über das Anschlussteil (27) mit dem zumindest einen Notlösezug (15) verbindbar ist und das Führungsteil (28) gelenkig mit dem Anschlussteil (27) und dem Kraftübersetzer (26) verbunden ist.

3. Notlösevorrichtung nach Anspruch 1 oder 2, **dadurch gekennzeichnet, dass** die zumindest eine Betätigungsvorrichtung (17) eine Halterung (32) aufweist, über welche die zumindest eine Betätigungsvorrichtung (17) mit dem Wagenkasten (21) verbindbar ist.

4. Notlösevorrichtung nach Anspruch 3, **dadurch gekennzeichnet, dass** die Halterung (32) gelenkig mit dem Kraftübersetzer (26) verbunden ist und mittels der Halterung (32) das Anschlussteil (27) geführt ist.

5. Notlösevorrichtung nach Anspruch 3 oder 4, **dadurch gekennzeichnet, dass** die Halterung (32) hakenförmig ausgeführt ist.

6. Notlösevorrichtung nach einem der Ansprüche 1 bis 5, **dadurch gekennzeichnet, dass** der Kraftübersetzer (26) als Betätigungshebel ausgebildet ist.

7. Notlösevorrichtung nach Anspruch 6, **dadurch gekennzeichnet, dass** der Betätigungshebel als Fußhebel ausgebildet ist.

8. Notlösevorrichtung nach einem der Ansprüche 1 bis 7, **dadurch gekennzeichnet, dass** die zumindest eine Betätigungsvorrichtung (17) im Bereich eines Türausschnitts (23) mit dem Fahrzeugboden (25) verbindbar ist.

9. Notlösevorrichtung nach einem der Ansprüche 1 bis 7, **dadurch gekennzeichnet, dass** die zumindest eine Betätigungsvorrichtung (17) im Bereich einer Öffnung (42) des Fahrzeugbodens (25) mit dem Fahrzeugboden (25) verbindbar ist.

10. Notlösevorrichtung nach einem der Ansprüche 1 bis 9, **dadurch gekennzeichnet, dass** die zumindest eine Betätigungsvorrichtung (17) einen Griff (35) aufweist.

## Claims

1. Emergency release device for a vehicle brake, in particular for a parking brake of an undercarriage of a rail vehicle, having at least one emergency release pull, which can be connected to a brake device, and at least one mechanical actuating device, which can be connected to the at least one emergency release pull, **characterised in that** the at least one actuating device (17) can be connected to a carriage body (21) in a manner projecting above a vehicle floor (25) and has a force multiplier (26).

2. Emergency release device according to claim 1, **characterised in that** the at least one actuating device (17) has a connecting part (27) and a guiding part (28), the at least one actuating device (17) can be connected to the at least one emergency release pull (15) via the connecting part (27) and the guiding part (28) is connected in an articulated manner to the connecting part (27) and the force multiplier (26) .

3. Emergency release device according to claim 1 or 2, **characterised in that** the at least one actuating device (17) has a mounting bracket (32) via which the at least one actuating device (17) can be connected to the carriage body (21) .

4. Emergency release device according to claim 3, **characterised in that** the mounting bracket (32) is connected to the force multiplier (26) in an articulated manner and the connecting part (27) is guided by means of the mounting bracket (32).

5. Emergency release device according to claim 3 or 4, **characterised in that** the mounting bracket (32) is hook-shaped.

6. Emergency release device according to one of claims 1 to 5, **characterised in that** the force multiplier (26) is embodied as an actuating lever.

7. Emergency release device according to claim 6, **characterised in that** the actuating lever is embodied as a foot lever.

8. Emergency release device according to one of claims 1 to 7, **characterised in that** the at least one actuating device (17) can be connected to the vehicle floor (25) in the region of a door cutout (23).

9. Emergency release device according to one of claims 1 to 7, **characterised in that** the at least one actuating device (17) can be connected to the vehicle floor (25) in the region of an opening (42) of the vehicle floor (25).

10. Emergency release device according to one of claims 1 to 9, **characterised in that** the at least one actuating device (17) has a handle (35).

## Revendications

1. Dispositif de desserrage d'urgence pour un frein de véhicule, en particulier pour un frein d'immobilisation d'un bogie d'un véhicule ferroviaire, comprenant au moins un train de desserrage d'urgence qui peut être relié à un dispositif de freinage et au moins un dispositif d'actionnement mécanique qui peut être relié audit au moins un train de desserrage d'urgence, **caractérisé en ce que** ledit au moins un dispositif d'actionnement (17) peut être relié, en surplombant un plancher de véhicule (25), à une caisse de voiture (21) et présente un élément de transmission de force (26).

2. Dispositif de desserrage d'urgence selon la revendication 1, **caractérisé en ce que** ledit au moins un dispositif d'actionnement (17) présente un élément de raccordement (27) de même qu'un élément de guidage (28), ledit au moins un dispositif d'actionnement (17) pouvant être relié par l'intermédiaire de l'élément de raccordement (27) audit au moins un train de desserrage d'urgence (15) et l'élément de guidage (28) étant relié en articulation à l'élément de raccordement (27) et à l'élément de transmission de force (26).

3. Dispositif de desserrage d'urgence selon la revendication 1 ou 2, **caractérisé en ce que** ledit au moins un dispositif d'actionnement (17) présente une fixation (32) par l'intermédiaire de laquelle ledit au moins un dispositif d'actionnement (17) peut être relié à la caisse de voiture (21).

4. Dispositif de desserrage d'urgence selon la revendication 3, **caractérisé en ce que** la fixation (32) est reliée en articulation à l'élément de transmission de force (26) et l'élément de raccordement (27) est guidé au moyen de la fixation (32) .

5. Dispositif de desserrage d'urgence selon la revendication 3 ou 4, **caractérisé en ce que** la fixation (32) est réalisée en forme de crochet.

6. Dispositif de desserrage d'urgence selon l'une quelconque des revendications 1 à 5, **caractérisé en ce que** l'élément de transmission de force (26) est réalisé sous la forme d'un levier d'actionnement.

7. Dispositif de desserrage d'urgence selon la revendication 6, **caractérisé en ce que** le levier d'actionnement est réalisé sous la forme d'une pédale.

8. Dispositif de desserrage d'urgence selon l'une quelconque des revendications 1 à 7, **caractérisé en ce que** ledit au moins un dispositif d'actionnement (17) peut être relié dans la zone d'une découpe de portière (23) au plancher de véhicule (25).

9. Dispositif de desserrage d'urgence selon l'une quelconque des revendications 1 à 7, **caractérisé en ce que** ledit au moins un dispositif d'actionnement (17) peut être relié dans la zone d'une ouverture (42) du plancher de véhicule (25) au plancher de véhicule (25).

10. Dispositif de desserrage d'urgence selon l'une quelconque des revendications 1 à 9, **caractérisé en ce que** ledit au moins un dispositif d'actionnement (17) présente une poignée (35).
